# EUROPEAN PATENT SPECIFICATION

(11) **EP 2 539 539 B1**
(45) Date of publication and mention of the grant of the patent: **20.06.2018**
(21) Application number: 11746921.3
(22) Date of filing: 24.02.2011
(51) Int. Cl.: E21B 44/00, E21B 7/02, E21D 20/00, G06F 3/14, E21D 9/00

(54) **METHOD OF PRESENTING POSITIONING INFORMATION, USER INTERFACE, AND ROCK DRILLING RIG**
VERFAHREN ZUR DARSTELLUNG VON POSITIONIERUNGSINFORMATIONEN, BENUTZEROBERFLÄCHE SOWIE STEINBOHRVORRICHTUNG
PROCÉDÉ DE PRÉSENTATION D'INFORMATIONS DE POSITIONNEMENT, INTERFACE UTILISATEUR, ET INSTALLATION DE FORAGE DE ROCHE

(30) Priority: 25.02.2010 FI 20105183
(43) Date of publication of application: 02.01.2013
(73) Proprietor: Sandvik Mining and Construction Oy, 33330 Tampere (FI)
(72) Inventor: PUURA, Jussi, FI-33330 Tampere (FI)
(74) Representative: Sandvik
(86) International application number: PCT/FI2011/050165
(87) International publication number: WO 2011/104440

(56) References cited:
- WO-A1-03/025341
- WO-A1-2008/078002
- WO-A1-2008/125735
- CN-A- 1 599 836
- FI-B- 119 263
- JP-A- H1 096 627

## Description

### BACKGROUND OF THE INVENTION

The invention relates to a method of presenting positioning information when drilling holes in a rock cavern as a fan-like pattern, for example in drilling reinforcement holes. Reinforcement holes are drilled with a rock drilling rig comprising at least one boom with a drilling unit. A display device of a control unit of the rock drilling rig enables presentation of information on reinforcement holes, such as their locations and directions. Further, the real location and direction of the drilling unit are determined, and the drilling unit is displayed with the display device in relation to the reinforcement holes. The location and direction of the drilling unit may be changed by means of at least one control member in such a way that the drilling unit can be positioned at the start point of the reinforcement hole and in the determined direction. The operator can use the information displayed with the display device to facilitate the positioning.

Further, the invention relates to a user interface of the control unit of a rock drilling rig. Yet further, the invention relates to a rock drilling rig to which the above method and user interface can be applied.

The field of the invention is presented in more detail in the preambles of the independent claims of the application.

Rock may be drilled in rounds using a drilling system as disclosed for example in WO2008125735. Then, drill holes are first drilled in rock, after which the drill holes are charged and blasted. Rock material becomes detached from the rock by the amount of the length of the round, and it is transported elsewhere before drilling the next round. Various tunnels, underground storage halls, containers, parking spaces or other corresponding rock caverns may be formed in the rock by excavation. However, the rock in which such rock caverns are excavated is not always sufficiently firm, uniform and stable by nature. Also, blasting a round may break or otherwise weaken the rock defining the rock cavern, so that the firmness of the rock is insufficient after excavation. Thus, it is rather typical that the ceiling and walls of the rock cavern, sometimes even the floor, must be reinforced. Reinforcing may be done by drilling to the rock several reinforcement holes in which a rock bolt, a cable or the like reinforcement member or reinforcement material is fitted. Typically, the reinforcement holes are drilled by using a separate mining vehicle provided with a drilling boom having a drilling unit and means for mounting the reinforcement in the drilled hole. The reinforcement holes are usually drilled as a fan-like pattern in such a way that they are directed crosswise in relation to the tunnel line.

Generally, a plan is made for reinforcing a rock cavern, and information on the rock type, for example, is determined in advance. The orderer of the rock cavern may also set various requirements for the reinforcement. In order to meet these requirements, a reinforcement pattern may be designed for the rock cavern as office work in advance, the pattern being provided for the rock drilling rig so that the predetermined reinforcements can be mounted in exactly the right way.

When implementing a reinforcement pattern, the drilling unit may be positioned manually at the start point and in the start direction of the reinforcement hole, as determined by the pattern. Positioning may be facilitated by a display device of the control unit of the rock drilling rig, which may display the designed reinforcement pattern and the real location of the drilling unit relative to the pattern. Positioning the drilling unit is, however, laborious because it is difficult to display all degrees of freedom of the three-dimensional positioning in a two-dimensional display device.

### BRIEF DESCRIPTION OF THE INVENTION

An object of the invention is to provide a novel and improved method of presenting positioning information in a display device of a rock drilling rig and, further, a novel and improved user interface and rock drilling rig to which the method is applied.

The method according to the invention is characterized by presenting a display image comprising at least a first partial view and a second partial view which are simultaneously active; and presenting in the partial views the location of the fan plane and the drilling unit relative to each other by using differing projections.

The user interface according to the invention is characterized in that the display image of the display device comprises at least a first partial view and a second partial view which are simultaneously active, the partial views having differing projections of the reciprocal location of the fan plane and the drilling unit; and that the directions presented by the display image and the physical directions of motion of the control member have intuitive connection.

The rock drilling rig according to the invention is characterized in that the display image of the display device comprises at least a first partial view and a second partial view which are simultaneously active, the partial views having differing projections of the reciprocal location of the fan plane and the drilling unit.

An idea is to present in a display device a display image comprising at least two partial views having projections differing from each other; in other words, the directions of observation in the partial views are different. The partial views present the determined location and direction of the drilling unit in relation to the xz-directed fan plane where the start points of the holes to be drilled are positioned. The partial views are simultaneously active in the display image. The display device thus presents all essential information relating to the positioning of a drilling unit simultaneously in a single display image. This is applicable when a predesigned drilling pattern is implemented but also when the drilling is carried out as planned by the operator. In both cases, there is a need to present the fan plane and some drill hole information as well as the location of the drilling unit in relation to them.

An advantage is that owing to the novel display image, the operator sees, with the aid of the partial views, the location of the drilling unit relative to the drill hole information and the fan plane, which facilitates the positioning of the drilling unit at start points of the holes to be drilled and the directing of the drilling unit. The operator can see in a single display image all coordinate directions affecting the positioning of the drilling unit simultaneously. Thus, the operator does not have to make any changes between different views to be loaded to the display device. The novel display image of the control unit and the novel user interface accelerate the positioning and improve the accuracy of the drilling performed.

The idea of an embodiment is that in the display image, the xz projection of the fan line in the direction of the tunnel line is presented as the first partial view, i.e. the fan plane is observed from direction y; and that the projection of the same fan plane in direction xy is presented as the second partial view, so that the fan plane is observed from above, i.e. from the direction of z axis. Thus, in the first partial view, the positioning movements of the drilling unit are presented in the direction of the fan plane, and in the second partial view, the positioning movements of the drilling unit are presented in the direction of depth.

The idea of an embodiment is that the first partial view and the second partial view are presented in the display image simultaneously and, in the vertical direction of the display device, one upon the other. Further, both partial views present a symbol denoting the drilling unit at the same point, seen in the lateral direction. Such a display image is particularly illustrative and gives the operator a clear image of the positioning situation.

The idea of an embodiment is that the second partial view presents the fan plane under observation as a line on which the start points of the holes to be drilled are positioned. There is not necessarily any other information on the fan plane or the holes to be drilled. By means of the second partial view, the reciprocal position of the drilling unit and the fan plane are expressed in direction y; in other words, the second partial view is a "depth view".

The idea of an embodiment is that the display image presents a symbol of the drilling unit and a line or the like marking extending from it which indicates the direction and length of the drill hole if the drilling were performed starting from the presented location and direction of the drilling unit. The length of the drill hole may be presented according to a default length, selected length or a hole length defined in a drilling pattern.

The idea of an embodiment of the invention is that the display image presents a symbol of the drilling unit and a broken line or the like marking extending from it which indicates the direction and length of a feed beam comprised by the drilling unit. Owing to this application, the operator sees the space requirement in the display image in order to perform the drilling.

The idea of an embodiment of the invention is that a rock cavern is reinforced according to a predesigned reinforcement pattern. The reinforcement pattern is loaded to a control unit and presented by means of a display device. The reinforcement pattern has one or more reinforcement fans in which locations, directions and lengths of several reinforcement holes are defined. One reinforcement fan forms one reinforcement plane where the start points of the reinforcement holes of the fan are positioned. The reinforcement fan is observed in at least two different projections in the partial views of the display image.

The idea of an embodiment is that the first partial view of the display image presents one reinforcement fan of the reinforcement pattern as well as the location and direction of at least one drilling unit. The first partial view is an xz projection in the direction of the tunnel line; in other words, the reinforcement fan is observed in the y direction. The first partial view presents at least the reinforcement profile of the reinforcement fan and the reinforcement holes positioned on it. Further, the second partial view of the user interface presents the corresponding reinforcement fan from above, i.e. seen from the direction of z axis, this being a projection in the direction of the xy plane. The second partial view presents the xz plane of the reinforcement fan, i.e. the reinforcement plane as a mere line in the cross direction relative to the tunnel line. In practice, this line may be presented as a horizontal line in the display device. Further, the control unit positions the symbol denoting the drilling unit in this partial view, whereby the y-directional location of the drilling unit relative to the plane in the xz direction of the reinforcement fan can be seen in the display device. On the basis of this view, the operator has "depth vision" and he/she can move the drilling unit forwards and backwards in the direction of the tunnel line.

The idea of an embodiment is that the reinforcement pattern comprises several, for instance 2 to 5 fans, which are shown in the second partial view as crosswise lines positioned at a y-directed distance determined in the reinforcement pattern from each other. On the basis of this application, the operator also gets an idea about the location of the other reinforcement planes.

The idea of an embodiment is that the display image comprises one display window having the partial views positioned one upon the other.

The idea of an embodiment is that the display view comprises two separate display windows which may be positioned in the display image in a desired manner. The display windows may be positioned in the display view for example one upon the other or next to each other.

The idea of an embodiment is that the second partial view shows a coning angle θ₂ of the drilling unit as a numeric value, the positive values indicating that the drilling unit is tilted forwards in direction y and the negative values indicating that the drilling unit is tilted backwards in direction y.

The idea of an embodiment is that the operator is informed by the control unit when all the holes have been drilled. The information may be a visual message or a symbol, for example a "ready" symbol shown in the display device.

The idea of an embodiment is that the same rock drilling rig can be used for drilling both excavation holes in the face of a rock cavern and reinforcement holes as a fan-like pattern, and that the display image of the display device can be selected to be an excavation view or a reinforcement view.

The idea of an embodiment is that the same rock drilling rig is used for simultaneously drilling both excavation holes and reinforcement holes. In this case, the rock drilling rig comprises two or more drilling units which may be used for drilling both hole types. It can be selected in the user interface of the control unit which drilling unit drills the excavation pattern in the face of the rock cavern and which unit drills the reinforcement pattern as a fan-like pattern. The display image is changed depending on whether it is an excavation hole or a reinforcement hole that is involved.

The idea of an embodiment is that the drilling is performed with the same rock drilling rig on two or more fan planes simultaneously. It can be selected in the user interface which fan plane and drilling unit situation is shown in the display device.

The idea of an embodiment is that the display image shows the fan plane closest to the drilling unit under observation (direction y) and the closest drill hole planned (on the xz plane). When the preceding hole has been drilled, the display image may automatically show a blown-up image of the next closest drill hole planned in relation to the drilling unit. This facilitates and accelerates the positioning when no automatic sequences are used to implement the drilling pattern.

The idea of an embodiment is that reinforcement holes are drilled without a predesigned reinforcement pattern; in other words, what is called occasional reinforcement is used. In such a case, the operator of the rock drilling rig positions reinforcements in the rock cavern on the basis of his/her expertise. In this application, it is particularly helpful that the locations and directions of the reinforcement holes already drilled are presented by means of the display device because then it is easier for the operator to plan the location and direction of the reinforcement hole to be drilled next. The operator may also position the start locations of the reinforcement holes on the same xz-directed reinforcement plane when he/she sees in the second partial view of the display image the xz-directed plane going through the start point of the reinforcement hole already drilled as a horizontal line as well as the location of the drilling unit in relation to it.

The idea of an invention is that the control unit is arranged to control the actuators of the drilling unit which affect the positioning. The operator gives the drilling unit a target position by means of at least one control member connected to the control unit, and the control unit moves the drilling unit towards this target position. Thus, instead of being directly controlled by the operator, the actuators affecting the positioning are computer-controlled. However, the positioning itself is manual. In addition, the user interface of the control unit has intuitive connection, whereby the directions shown in the display image correspond to the physical directions of motion of the control member. When wishing the drilling unit to turn counterclockwise, the operator guides the control member controlling this movement in the corresponding direction. Further, moving the control member relative to one coordinate or direction does not affect other coordinates or directions. Owing to this application, the operator needs not think about joints or kinematics of the boom to achieve the desired movements for the drilling unit but he/she can only focus on giving the control system the target positions and target directions of the drilling unit, towards which the control unit automatically performs the required movements. This decreases the operator's mental load and accelerates the control.

The idea of an embodiment is that the rock drilling rig is intended for drilling both face drill holes and reinforcement holes. In this case, the control system of the rock drilling rig may comprise a face drilling mode and a fan drilling mode, in which modes the operator can manually position the drilling unit at the start point of the drill hole to be drilled. Selecting the control mode also affects how the moving of a manual control member comprised by the control system affects the real movements of the drilling unit. The drilling unit moves in response to the movement of the control member, the responses being different in the face drilling mode and in the fan drilling mode. Thus, in different modes, the drilling unit reacts to manual control movements in different ways. In addition, moving the manual control member is arranged to affect the position and direction of the drilling unit by means of the control system, whereby the control member does not control an individual actuator or joint of the boom directly. The control system determines the required changes in the movement for the boom joints and, accordingly, guides the actuators affecting the positioning of the drilling unit. An advantage of this application is that the rock drilling rig can be used more efficiently than before both for face excavation and for reinforcing surfaces defining the rock cavern. This results from, for example, the fact that the different control modes arranged for excavating and reinforcing essentially facilitate the manual control performed by the operator by affecting the control member. The operator indicates the new target position to the drilling unit by means of the control member, and the control system executes the required measures, with which the target expressed by the operator is achieved in practise.

The idea of an embodiment is that the control system of the rock drilling rig comprises the above-mentioned face drilling mode and fan drilling mode and, in addition, when the fan drilling mode is connected, moving the manual control member in a desired direction results in a positioning movement of the drilling unit in the direction indicated. The other coordinates and directions remain unchanged. When, for example, the drilling unit is turned in the direction of a rotation angle θ₁, the y-directed coordinate and coning angle θ₂ of the drilling unit do not change. Further, when the drilling unit is moved in the direction of the tunnel line, only the y coordinate changes, while the rest of the coordinates and direction angles remain unchanged. This facilitates the operator's work essentially.

The idea of an embodiment is that in the control mode, moving the drilling unit is arranged to be natural in the drilling direction determined by the mode. The face drilling mode takes into account the drilling performed forwards. In the fan drilling mode, moving the drilling unit is arranged to be natural to perform the drilling upwards and sidewards, for example in the form of a reinforcement fan. The influencing directions of the manual control member in the modes have been selected to correspond to the logical directions of motion of the drilling unit, whereby moving the control member in one direction of motion causes real movement of the drilling unit in the direction of motion of the control member. Thus, intuitive behaviour of the control unit is achieved. The location and direction of the drilling unit are shown in the display device of the control unit by means of a symbol, whereby moving the control member in one direction causes the symbol to move in the corresponding direction. If, for example, the operator wishes to turn the symbol of the drilling unit counterclockwise in the display device, he/she gives a command with the control member to turn the drilling unit counterclockwise. If the operator wishes to turn the symbol on the display to himself/herself, he/she gives a control command towards himself/herself. If the control member is a joystick, the operator turns it physically in the direction in which he/she wishes the control on the display to take place. This intuitive operating principle significantly facilitates the positioning.

The idea of an embodiment is collecting information on the profile of the rock cavern, obtained during the drilling of the fan. During the drilling of the fan, the drilling unit is positioned at the holes to be drilled, whereby the drill bit comes into contact with the profile of the rock cavern at several points. Thus, what is called a rock identification point is formed at each hole to be drilled, the coordinates of which point can be determined in the control unit and stored. On the basis of the rock identification points, the real profile of the rock cavern can be drawn, and it can be presented in a display device, for example. On the basis of the profile information obtained from the drilling of several fans, such as reinforcement fans, a three-dimensional presentation of the realized profile of the rock cavern or a part of it can also be formed and presented in a display device. By means of this application, it can be assessed how successful previous excavation has been, in other words whether the excavation has been according to the excavation plan or whether over-excavation or under-excavation, for example, has taken place.

The idea of an embodiment is collecting information on the coordinates of the start location and end location as well as the direction and lenght of the reinforcement holes drilled, and storing this information so that the location of the reinforcements can be found out later. In this way, documentation on the reinforcement of the rock cavern can be obtained at the same time. Further, information obtained during the drilling, such as information on the rock type, can be stored.

The idea of an embodiment is that excavation holes are drilled in a fan-like pattern with a rock drilling rig. The drilling rig is, in this case, a fan drilling rig applicable to production hole drilling. Thus, the user interface according to the invention and the display image comprised by it can also be efficiently utilized in positioning and as a sight tool. Individual features and combinations thereof presented in this application can also be applied to a production hole drilling rig intended for fan drilling, in which excavation holes are drilled in a fan-like pattern crosswise to the tunnel line according to a predesigned drilling pattern, or sometimes also at points selected by the operator himself/herself.

### BRIEF DESCRIPTION OF THE FIGURES

Some embodiments of the invention will be explained in greater detail in the attached drawings, in which
Figure 1 shows schematically a rock drilling rig positioned in the face of a rock cavern for drilling reinforcement holes;
Figure 2 shows schematically a perspective view of an excavation pattern positioned in the face of a tunnel as well as a reinforcement pattern positioned in the tunnel portion already excavated, comprising two reinforcement fans;
Figure 3 shows schematically a rectangular x,y,z coordinate system used in the reinforcement pattern, and direction angles θ₁ and θ₂;
Figure 4 shows schematically a user interface according to the invention and its connections;
Figure 5 shows schematically a display image presented in a display device and having two partial views positioned one upon the other, whereby the reinforcement pattern or another reinforcement plane under observation and the drilling unit are shown in different projections; and
Figure 6 shows schematically positioning of a drilling unit when the reinforcement mode has been selected in the user interface.

Fort the sake of clarity, the figures show some embodiments of the invention simplified. Similar parts have been denoted with the same reference numerals in the figures.

### DETAILED DESCRIPTION OF SOME EMBODIMENTS OF THE INVENTION

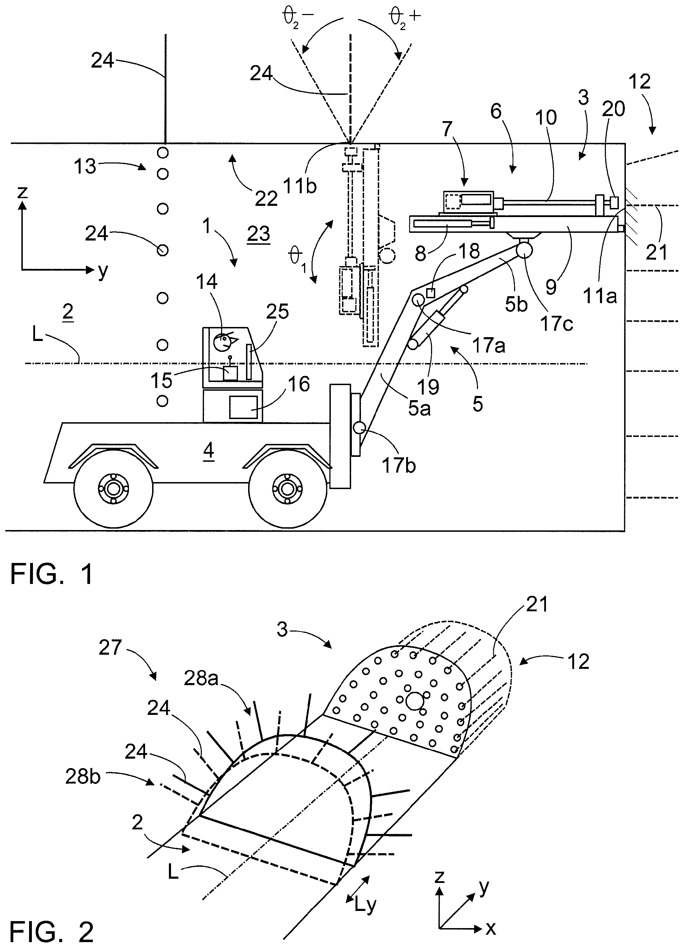

Figure 1 shows a rock drilling rig 1 navigated in a face 3 of a tunnel 2 or the like rock cavern. The rock drilling rig 1 comprises a movable carrier 4 provided with one or more drilling booms 5, each of which has a rock drilling unit 6 at its outermost end. The rock drilling unit 6 comprises a rock drilling machine 7 which can be moved by means of a feed device 8, guided by a feed beam 9. The drilling machine 7 may comprise an impact device for giving impact pulses to a tool 10 attached to the drilling machine. Further, the drilling machine 7 may comprise a rotation device for rotating the tool 10. The drilling unit 6 may be positioned at a start location 11a of a drill hole, planned in advance, by moving the boom 5. A drilling pattern may be predesigned for the drilling, which pattern may define the start locations, end points, directions, lengths and dimensions of the drill holes to be drilled in the coordinate system of the working site. Separate drilling patterns may be designed for drilling a round 12 and for a rock bolt fan 13. When the rock drilling rig 1 is driven to the drilling location, navigation is first carried out in which the coordinate system of the drilling rig is connected to the coordinate system of the working site.

The actual drilling cycle may be performed automatically for each drill hole after the drilling unit 6 has first been positioned in the start location and direction determined by the drilling pattern. The drilling unit 6 may be positioned manually. Thus, an operator 14 gives, by means of a control member 15, the drilling unit 6 a new target position, on the basis of which the control system determines the required movements of the boom 5. The control system may comprise one or more control units 16, which may be a computer or a processor capable of determining the required movements on the basis of the physical structure and current position of the boom. The boom 5 may comprise two or more boom parts 5a, 5b connected to each other by means of joints 17a. Further, the boom 5 is connected to the carrier by means of a joint 17b and to the drilling unit 6 by means of a joint 17c. The drilling boom 5 is a construction which can be moved in a versatile manner although Figure 1 shows, for the sake of clarity, only a greatly simplified boom. In connection with the joints 17, there may be sensors 18 or the like measuring devices, and on the basis of the position information obtained from them, the control unit 16 can determine the position of the boom and also the location and direction of the drilling unit 6. The boom 5 and its parts can be moved with actuators 19 which can be controlled by the control unit 16 on the basis of the target location indicated by the operator 14 and the position information on the boom 5. For the sake of clarity, Figure 1 shows only one sensor and one actuator.

In the positioning, the position of the drilling unit 5 can be observed on the basis of the position of a drill bit 20 at the outermost end of the tool 10 because it is the intention to take the drill bit 20 to a start location 11a of the drill hole to be drilled. The direction can be observed as the direction of the longitudinal axis of the tool 10. In Figure 1, the drilling unit 5 is positioned at the point of an excavation drill hole 21 to be drilled. The tunnel 2 is excavated by drilling in the face 3 several excavation holes 21 substantially in the direction of a tunnel line L, which are charged after the drilling. In blasting, rock material is detached from the rock by the amount of the round 12. The only purpose of the excavation holes 21 is to ensure formation of the desired round length and detachment of rock in the way planned and as pieces of the right size. Blasting a round may damage the rock defining the tunnel, or the firmness of the rock may be insufficient by nature in order to guarantee a safe tunnel. Thus, there may be a need to reinforce the ceiling 22 and walls 23 of the tunnel 2. The rock may be reinforced by drilling, in accordance with a predetermined pattern, several adjacent reinforcement holes 24 to which a rock bolt or the like reinforcement can be fitted. The number, depth, diameter, start locations and directions of reinforcement holes 24 may be determined in the reinforcement pattern. The reinforcement holes 24 may be drilled in fan form, whereby there are drill holes on both walls 23 and on the ceiling 22 of the tunnel. Alternatively, reinforcement holes 24 can be drilled only on the ceiling 22, so that an overhead reinforcing beam is provided. The direction of the reinforcement holes 24 is crosswise to the tunnel line L. The drilling boom 5 is, however, constructed in such a way that the drilling unit 6 can be positioned in the start locations 11b of the reinforcement holes 24 pointing upwards or sidewards. Naturally, reinforcement holes directed downwards may also be drilled.

When excavation holes 21 are drilled, the operator 14 connects the control unit 16 to the excavation mode, and when the same drilling unit 6 is used for drilling reinforcement holes 24, the operator 14 selects the reinforcement mode. By means of the modes, it is possible to have an influence on how the control unit 16 performs the real positioning movements of the drilling unit 5 in response to the operator's 14 manual control movements. The control member 15 may be a joystick, turning of which in a given direction may implement a different movement for the drilling unit 6 in the reinforcement mode than in the excavation mode.

The control system may further comprise a display device 25 which may show the drilling patterns and the position of the drilling unit 6 relative to the holes to be drilled. The operator 14 may perform the manual control movements on the basis of the information obtained from the display device 25.

Figure 2 ilustrates a tunnel 2 in the face 3 of which drill holes 21 according to an excavation pattern can be drilled for excavating a round 12 and which can be reinforced by positioning reinforcements according to a reinforcement pattern 27 on its ceiling 22 and walls 23. The reinforcement pattern 27 determines an xz-directed reinforcement plane which is crosswise, usually perpendicular, relative to a tunnel line L and on which the start locations of the reinforcement holes 24 are located. The direction of the reinforcement holes 24 is crosswise to the tunnel line L. The reinforcement pattern 27 may comprise one or more reinforcement fans, for example 1 to 5 reinforcement fans 28a, 28b, which are positioned at a predetermined distance Ly from each other, seen in the direction of the tunnel line L. The distance Ly is determined in such a way that the fans 28 comprised by the reinforcement pattern 27 can be drilled from the same navigation position.

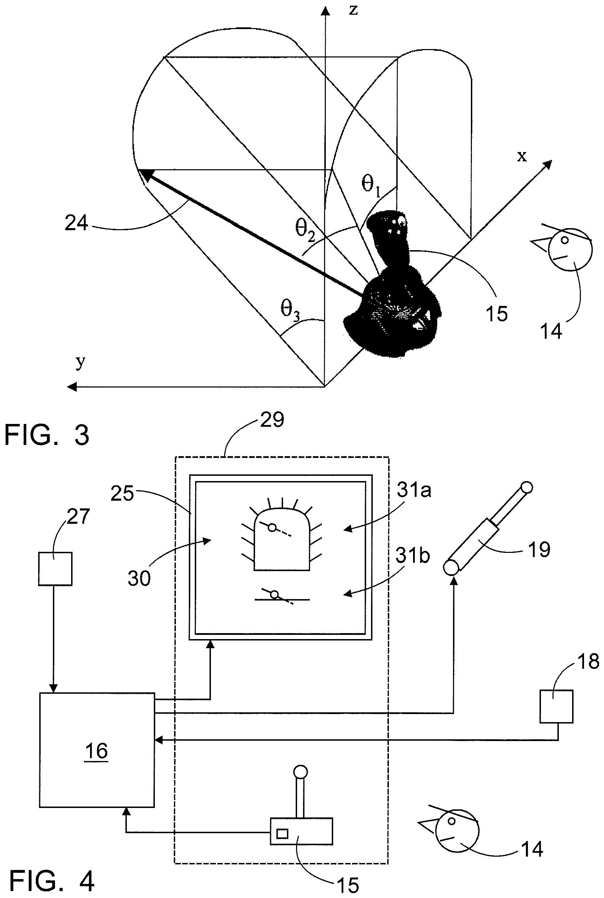

Figure 3 shows a coordinate system used in the reinforcement pattern as well as the direction angles. As can be seen, a rectangular x,y,z coordinate system may be used in the reinforcement. Reference numeral 24 in Figure 3 indicates a reinforcement hole and its direction. In addition to the coordinates of the start point and end point, the reinforcement hole 24 has direction angles, i.e. coning angle θ₂ and rotation angle θ₁. The coning angle θ₂ is positive when the reinforcement hole 24 is directed at an angle obliquely towards the tunnel face and negative when the reinforcement hole 24 is directed obliquely away from the tunnel face. The direction of the reinforcement hole 24 on the zx plane is determined by means of the rotation angle θ₁. The rotation angle θ₁ obtains positive values when the reinforcement hole 24 is directed to the right, seen in direction y. The rotation angle θ₁ is negative when the reinforcement hole 24 is directed to the left, seen in direction y.

Figure 4 further shows a user interface 29 of the control unit 16 of a rock drilling rig as well as its connections. The user interface 29 comprises one or more display devices 25, such as a display panel, and one or more control members 15, such as a joystick. By means of the user interface 29, the operator 14 uses the control unit 16 as well as the programs and operating principles therein in such a way that the drilling unit can be made operate in a desired manner.

The display device 25 may present a reinforcement pattern 27 which can be inputted to the control unit 16. The display image 30 of the display device 25 may comprise two or more partial views 31a, 31b, which show a reinforcement plane 32 and a drilling unit 6, seen from different directions. Thus, the operator 14 sees the positioning situation in the display image 30 and can give, by means of a control member 15, control commands to the control unit 16 that, in turn, controls one or more actuators 19 so that a movement according to the control command in the position or direction of the drilling unit is realized. The operator 14 does not control an individual actuator 19 but gives the control unit a target position or direction, which is realized by the control unit. The location and direction of the drilling unit is determined by means of one or more sensors 18 or the like measuring device, the measuring information of which is transmitted to the control unit 16.

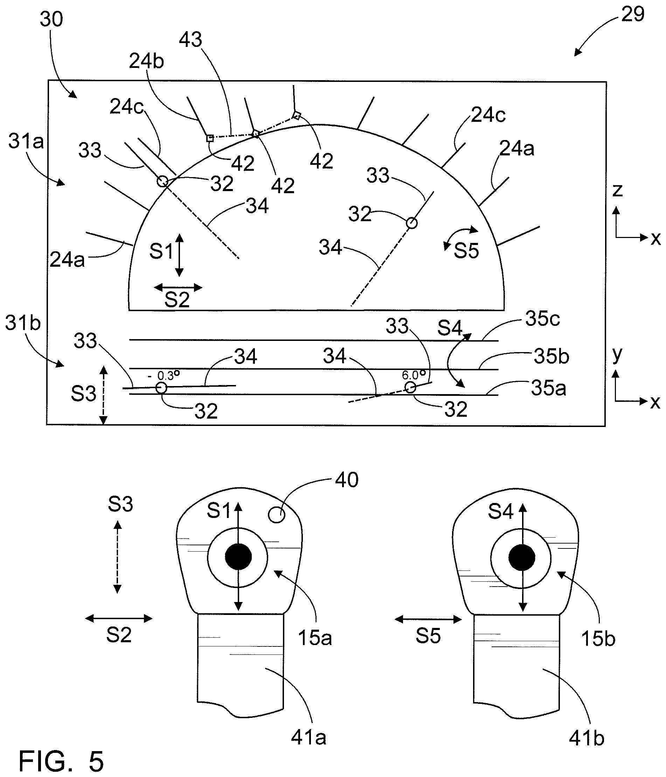

Figure 5 shows schematically a display image 30 with two partial views 31a and 31b positioned one upon the other. The first partial view 31a shows one reinforcement fan 28 of the reinforcement pattern 27, seen from direction y, and the second partial view shows the same reinforcement fan 28 seen from direction z. The xz plane of the reinforcement fan 28 thus forms a reinforcement plane in the partial views. The first partial view 31a shows the locations and directions of the reinforcement holes 24 as well as the location of the drilling unit 6 on the xz plane. The planned reinforcement holes 24a may be shown as lines extending from the reinforcement profile. The drilled reinforcement holes 24b may be shown in the realized locations and by using a marking, such as a square, at their start point. This realized start point is what is called a rock identification point 42. The planned reinforcement hole 24c to be drilled next may be shown in bold. The second partial view 31b may be used as depth vision; in other words, the location of the drilling unit 6 can be seen in it in relation to the reinforcement plane, i.e. to the xz plane of the reinforcement fan. The drilling unit 6 may be shown by means of a suitable symbol in the display image 30. In Figure 5, the symbol 32 of the drilling unit 6 is a circle from which a continuous line 33 extends, this line indicating an imaginary reinforcement hole which would be formed if the drilling were started in the current location and direction of the drilling unit 6. Further, the display image 30 may show a feed beam as a broken line 34, on the basis of which the operator can assess the space required by the drilling. Instead of the above symbol 32 and the related hole line 33 and feed beam line 34, other suitable marking and presentation manners may be used. In the second partial view 31b, the value of the coning angle can be presented as a numeric value. Further, the second partial view 31b may show the reinforcement plane corresponding to the first partial view 31a as a horizontal line 35a. The other reinforcement fans possibly comprised by the reinforcement pattern 27 may also be shown as horizontal lines 35b and 35c. The display image 30 according to Figure 5, where the partial views 31a and 31b are positioned one upon the other in the vertical direction, is clear and illustrative, which facilitates the operator's work.

The display image 30 according to Figure 5 is a sight tool facilitating the operator's work. When the hole line 33 of the boom symbol 32 and the line 24c indicating a reinforcement hole defined in the reinforcement pattern are positioned one upon the other in both partial views 31a and 31b, the drilling unit is positioned and oriented correctly.

Below the display image 30, Figure 5 further shows control members 15a and 15b comprised by the user interface 29, seen from above. The control members may be joysticks attached to, for example, a control panel 41a, 41b in connection with the operator's seat. The figure shows the movements of the joystick with arrows S1 and S2 and indicates how the drilling unit moves in the display image. When the switch 40 is selected, the y coordinate of the drilling unit can be influenced, as illustrated by arrow S3 in the figure. By means of the joystick 15b on the right-hand side, the direction angles can be influenced, as illustrated by arrows S4 and S5.

Figure 5 also shows that the rock identification points 42 may be presented in the display image 30. The information on the rock identification points 42 may also be stored and processed in the control unit. Furthermore, the display image may show a graph 43 running through the rock identification points 42. This illustrates where the rock surface is located in reality at the point of the fan. The information on the real rock surface may be stored and it may be processed and utilized in the rock drilling rig or outside it.

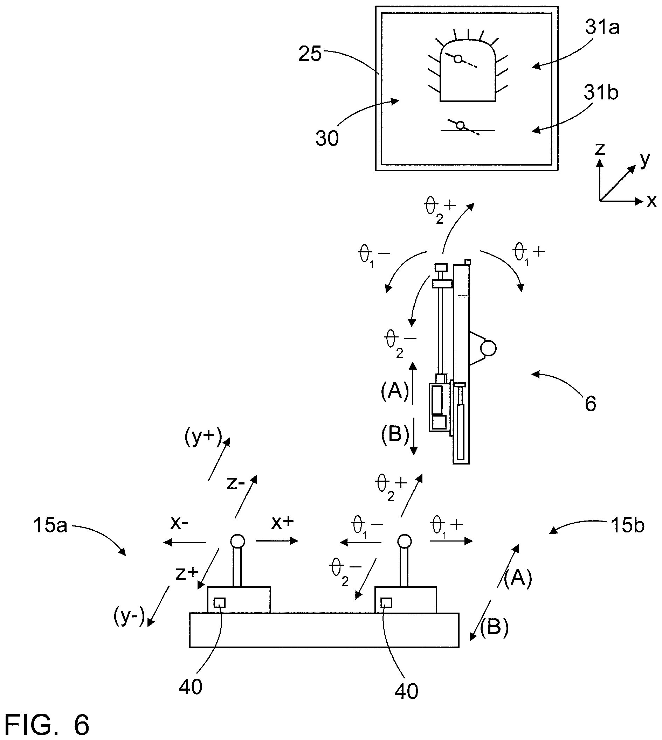

Figure 6 illustrates manual positioning of the drilling unit 6 by means of two joysticks 15a and 15b. The figure has arrows to indicate the directions of motion of the joysticks, and in connection with the arrow, the effect of the movement on the position and direction of the drilling unit 6 is denoted. The effect of the direction of motion is denoted in brackets when the switch 40 is selected during the movement. By means of the switch 40, an alternative function can be selected. As can be seen in the figure, the directions of motion of the joysticks 15a, 15b are logically connected to the real directions of motion of the drilling unit 6. When the face drilling mode is selected in the user interface, controlling the movements is different than in the fan drilling mode.

It is further to be noted that the rock drilling rig can be navigated to the drilling location by using tunnel lasers or a tacheometer, for example. In the navigation, the coordinate system of the rock drilling rig is connected to the coordinate system of the rock cavern. The reinforcement pattern or the drilling pattern of the excavation fan is typically designed in a separate coordinate system but in some cases it may also de designed in the coordinate system of the rock cavern, i.e. what is called a project coordinate system. Since two or more coordinate systems are used, it is necessary to connect the coordinate systems to each other with navigation. Thus, the required changes in the coordinates systems can be made between the project coordinate system, the coordinate system of the rock drilling rig and the coordinate system of the drilling pattern, whereby the coordinates can be presented in relation to another coordinate system. Further, after the navigation, the location of the fan to be drilled first can be indicated by taking the drilling unit and the drill bit in it to the point of the fan. Then, the navigation plane becomes positioned at the point of the first fan indicated.

Presentation of the positioning information disclosed in this application is a technical process comprising the use of a control unit and a display device of a rock drilling rig as technical means. Further, giving control commands by means of a control member requires technical judgement and technical steps. Furthermore, the aim is a concrete final result in which the drilling unit is positioned in a desired location and oriented in a desired manner. The arrangement described is concretely shown in a display device and put into effect by means of a rock drilling rig, whereby it obtains a real physical manifestation. The display device and the information presented in it are used as a sight tool, on the basis of which the operator carries out the positioning and orienting of the drilling unit. So, it is not an abstract visualization that is involved here but the arrangement for carrying out the sighting is part of the real positioning and orienting. On the basis of the above aspects, it is obvious that any pure mental act that may occur abstractly without technicality is disclaimed from this application.

In some cases, features presented in this application may be used as such, irrespective of other features. On the other hand, features presented in this application may, if required, be combined to form various combinations.

The drawings and the related description is only intended to illustrate the idea of the invention. Details of the invention may vary within the claims.

## Claims

1. A method of presenting positioning information in a rock drilling rig, which rock drilling rig (1) comprises: a movable carrier (4); at least one drilling boom (5) movable in relation to the carrier (4); a drilling unit (6) arranged on the drilling boom (5) and comprising at least one feed beam (9); a feed device (8), a rock drilling machine (7) and a tool (10); and further at least one control unit (16) as well as at least one display device (25) and at least one control member (15) which are connected to it;
the method comprising:
determining the location and direction of the drilling unit (6) in the control unit (16);
presenting information on holes (24) to be drilled in a display device (25);
positioning the drilling unit (6) in a location and direction in which the selected hole (24) can be drilled;
performing the positioning manually by giving control commands to the control unit (16) by means of at least one control member (15); and
presenting the location and direction of the drilling unit (6) to an operator (14) in a display image (30) of the display device (25) relative to a fan plane in which the start point of the selected drill hole is located;
**characterized by**
presenting a display image (30) comprising at least a first partial view (31a) and a second partial view (31b) which are simultaneously active; and
presenting in the partial views (31a, 31b) the location of the fan plane and the drilling unit relative to each other by using differing projections.

2. A method according to claim **1,characterized by**
presenting in the display device (25) a drilling pattern (27) comprising at least one drilling fan (28) defining several drill holes and their locations and directions in a three-dimensional coordinate system;
presenting in the first partial view (31a) a projection of the drilling fan (28), seen from the direction of a tunnel line (L);
presenting in the second partial view (31b) a projection of the corresponding drilling fan (28) relative to the tunnel line (L), seen from the crosswise direction; and
presenting the first partial view (31a) and the second partial view (31b) one upon the other in the display image (30).

3. A method according to claim 1 or 2, **characterized by**
presenting in the second partial view (31b) the fan plane under observation as a line (35a) crosswise to the tunnel line (L), on which line the start points of the drill holes (24) are located.

4. A method according to any one of the preceding claims, **characterized by**
presenting all degrees of freedom of the positioning of the drilling unit (6) simultaneously by means of the partial views (31a, 31b) of the display image (30).

5. A method according to any one of the preceding claims, **characterized by**
giving a new target position to the drilling unit (6) by means of the control member (15) and by using the directions indicated in the display image (30); and
performing, controlled by the control unit (16), a movement for the drilling unit (6) in a selected direction and keeping the other directions unchanged.

6. A user interface of a control unit of a rock drilling rig, comprising:
at least one display image (25) arranged to present a display image (30) having the location and direction of a symbol denoting the location of the drilling unit relative to a fan plane on which the start points of the holes to be drilled are located; and
at least one control member (15) for giving control commands to the control unit (16) to position a drilling unit (6) comprised by the rock drilling rig at the start points of the drill holes (24);
**characterized in that**
the display image (30) of the display device (25) comprises at least a first partial view (31a) and a second partial view (31b) which are simultaneously active, the partial views having differing projections of the reciprocal location of the fan plane and the drilling unit; and that
the directions presented by the display image (30) and the physical directions of motion of the control member (15) have intuitive connection.

7. A user interface according to claim 6, **characterized in that**
moving the control member (15) in one selected direction is arranged to affect the location of the drilling unit in the display image (30) only in the selected direction.

8. A user interface according to claim 6 or 7, **characterized in that**
the display image (30) is arranged to present a symbol (32) of the drilling unit and further, in connection with this symbol (32), a hole symbol (33) denoting a drill hole to be formed as well as a feed beam symbol (34) denoting a feed beam.

9. A user interface according to any one of claims 6 to 8, **characterized in that**
the display image (30) is arranged to present a rock identification point (42) at the start point of each hole drilled, whereby the realized profile of the rock cavern can be seen at the point of the fan plane under observation in the display image (30).

10. A user interface according to claim 9, **characterized in that**
the display image (30) is arranged to present a graph running through two or more rock identification points and indicating the realized profile of the rock cavern at the point of the fan plane under observation.

11. A rock drilling rig, comprising:
a movable carrier (4);
at least one drilling boom (5);
a drilling unit (6) positioned on the drilling boom (5) and comprising at least a feed beam (9), a rock drilling machine (7) supported on the feed beam; a feed device (8) for moving the rock drilling machine on the feed beam; and a tool (10) attached to the rock drilling machine;
measuring means (18) for measuring the location and direction of the drilling unit (6);
at least one control unit (16) arranged to determine the location and direction of the drilling unit on the basis of the measurement information;
at least one display device (25) in the display image (30) of which the control unit (16) is arranged to present the drilling unit (6) relative to a fan plane running through the start points of holes (24) to be drilled; and
at least one control member (15) for giving manual control commands to position the drilling unit;
**characterized in that**
the display image (30) of the display device (25) comprises at least a first partial view (31a) and a second partial view (31b) which are simultaneously active, the partial views having differing projections of the reciprocal location of the fan plane and the drilling unit.

## Patentansprüche

1. Verfahren zum Darstellen von Positionierungsinformationen in einem Gesteinsbohrturm, wobei der Gesteinsbohrturm (1) Folgendes umfasst: einen bewegbaren Träger (4); zumindest einen Bohrausleger (5), der im Verhältnis zu dem Träger (4) bewegbar ist; eine Bohreinheit (6), die auf dem Bohrausleger (5) angeordnet ist und zumindest einen Vorschubbalken (9); eine Vorschubvorrichtung (8), eine Gesteinsbohrmaschine (7) und ein Werkzeug (10) umfasst; und weiter zumindest eine Steuereinheit (16) sowie zumindest eine Anzeigevorrichtung (25) und zumindest ein Steuerelement (15), die damit verbunden sind;
wobei das Verfahren Folgendes umfasst:
Bestimmen des Standorts und der Richtung der Bohreinheit (6) in der Steuereinheit (16);
Darstellen von Informationen über zu bohrende Löcher (24) in einer Anzeigevorrichtung (25);
Positionieren der Bohreinheit (6) an einem Standort und in einer Richtung, in der das ausgewählte Loch (24) gebohrt werden kann;
händisches Durchführen der Positionierung durch Eingeben von Steuerbefehlen an die Steuereinheit (16) mithilfe zumindest eines Steuerelements (15); und
Darstellen des Standorts und der Richtung der Bohreinheit (6) für einen Anwender (14) in einem Anzeigebild (30) der Anzeigevorrichtung (25) im Verhältnis zu einer Fächerebene, in der sich der Ausgangspunkt des ausgewählten Bohrlochs befindet;
**gekennzeichnet durch**:
Darstellen eines Anzeigebildes (30), das zumindest eine erste Teilansicht (31a) und eine zweite Teilansicht (31b) umfasst, die gleichzeitig aktiv sind; und
Darstellen des Standortes der Fächerebene und jenes der Bohreinheit im Verhältnis zueinander durch Verwenden unterschiedlicher Projektionen in den Teilansichten (31a, 31b).

2. Verfahren nach Anspruch 1, **gekennzeichnet durch**:
Darstellen eines Bohrmusters (27), das zumindest einen Bohrfächer (28) umfasst, der mehrere Bohrlöcher und ihre Standorte und Richtungen in einem dreidimensionalen Koordinatensystem definiert, in der Anzeigevorrichtung (25);
Darstellen einer Projektion des Bohrfächers (28) aus Sicht der Richtung einer Tunnellinie (L) in der ersten Teilansicht (31a);
Darstellen einer Projektion des entsprechenden Bohrfächers (28) im Verhältnis zu der Tunnellinie (L) aus Sicht der Querrichtung in der zweiten Teilansicht (31b); und
Darstellen der ersten Teilansicht (31a) und der zweiten Teilansicht (31b) übereinander in dem Anzeigebild (30).

3. Verfahren nach Anspruch 1 oder 2, **gekennzeichnet durch**: Darstellen der Fächerebene unter Beobachtung in der zweiten Teilansicht (31b) als Linie (35a) quer zu der Tunnellinie (L), wobei sich auf der Linie die Ausgangspunkte für die Bohrlöcher (24) befinden.

4. Verfahren nach einem der vorstehenden Ansprüche, **gekennzeichnet durch**:
gleichzeitiges Darstellen aller Freiheitsgrade der Positionierung der Bohreinheit (6) mithilfe der Teilansichten (31a, 31b) des Anzeigebildes (30).

5. Verfahren nach einem der vorstehenden Ansprüche, **gekennzeichnet durch**:
Eingeben einer neuen Zielposition für die Bohreinheit (6) mithilfe des Steuerelements (15) und durch Verwenden der in dem Anzeigebild (30) angezeigten Richtungen; und
Durchführen einer Bewegung für die Bohreinheit (6) in eine ausgewählte Richtung und Lassen der anderen Richtungen, wie sie sind, gesteuert durch die Steuereinheit (16).

6. Benutzeroberfläche einer Steuereinheit eines Gesteinsbohrturms, umfassend:
zumindest ein Anzeigebild (25), das angeordnet ist, ein Anzeigebild (30) mit Standort und der Richtung eines Symbols darzustellen, das den Standort der Bohreinheit im Verhältnis zu einer Fächerebene bezeichnet, auf der sich die Ausgangspunkte der zu bohrenden Löcher befinden; und
zumindest ein Steuerelement (15) zum Eingeben von Steuerbefehlen an die Steuereinheit (16), eine durch den Gesteinsbohrturm umfasste Bohreinheit (6) an den Ausgangspunkten der Bohrlöcher (24) zu positionieren;
**dadurch gekennzeichnet, dass**
das Anzeigebild (30) der Anzeigevorrichtung (25) zumindest eine erste Teilansicht (31a) und eine zweite Teilansicht (31b) umfasst, die gleichzeitig aktiv sind, wobei die Teilansichten unterschiedliche Projektionen des reziproken Standorts der Fächerebene und jenes der Bohreinheit aufweisen; und dass
die durch das Anzeigebild (30) dargestellten Richtungen und die physischen Bewegungsrichtungen des Steuerelements (15) eine intuitive Verbindung aufweisen.

7. Benutzeroberfläche nach Anspruch 6, **dadurch gekennzeichnet, dass** das Bewegen des Steuerelements (15) in eine ausgewählte Richtung angeordnet ist, den Standort der Bohreinheit in dem Anzeigenbild (30) nur in die ausgewählte Richtung zu verändern.

8. Benutzeroberfläche nach Anspruch 6 oder 7, **dadurch gekennzeichnet, dass** das Anzeigebild (30) angeordnet ist, ein Symbol (32) der Bohreinheit und weiter in Verbindung mit diesem Symbol (32) ein Lochsymbol (33), das ein zu bildendes Bohrloch bezeichnet, sowie ein Vorschubbalkensymbol (34) darzustellen, das einen Vorschubbalken bezeichnet.

9. Benutzeroberfläche nach einem der Ansprüche 6 bis 8, **dadurch gekennzeichnet, dass** das Anzeigebild (30) angeordnet ist, einen Gesteinsidentifizierungspunkt (42) an dem Ausgangspunkt jedes gebohrten Loches darzustellen, wodurch das entstandene Profil des Gesteinshohlraums an dem Punkt der Fächerebene unter Beobachtung in dem Anzeigebild (30) sichtbar ist.

10. Benutzeroberfläche nach Anspruch 9, **dadurch gekennzeichnet, dass** das Anzeigebild (30) angeordnet ist, ein Diagramm darzustellen, das zwei oder mehr Gesteinsidentifizierungspunkte durchläuft und das entstandene Profil des Gesteinshohlraums an dem Punkt der Fächerebene unter Beobachtung anzeigt.

11. Gesteinsbohrturm, umfassend:
einen bewegbaren Träger (4);
zumindest einen Bohrausleger (5);
eine Bohreinheit (6), die auf dem Bohrausleger (5) angeordnet ist und zumindest einen Vorschubbalken (9) eine Gesteinsbohrmaschine (7), die auf dem Vorschubbalken aufliegt; eine Vorschubvorrichtung (8) zum Bewegen der Gesteinsbohrmaschine auf dem Vorschubbalken; und ein Werkzeug (10) umfasst, das an der Gesteinsbohrmaschine befestigt ist;
ein Messmittel (18) zum Messen von Standort und Richtung der Bohreinheit (6);
zumindest eine Steuereinheit (16), die angeordnet ist, Standort und Richtung der Bohreinheit auf Basis der Messinformationen zu bestimmen;
zumindest eine Anzeigevorrichtung (25), in deren Anzeigebild (30) die Steuereinheit (16) angeordnet ist, die Bohreinheit (6) im Verhältnis zu einer Fächerebene darzustellen, die die Ausgangspunkte von zu bohrenden Löchern (24) durchläuft; und
zumindest ein Steuerelement (15) zum Eingeben händischer Steuerbefehle, die Bohreinheit zu positionieren;
**dadurch gekennzeichnet, dass**
das Anzeigebild (30) der Anzeigevorrichtung (25) zumindest eine erste Teilansicht (31a) und eine zweite Teilansicht (31b) umfasst, die gleichzeitig aktiv sind, wobei die Teilansichten unterschiedliche Projektionen des reziproken Standorts der Fächerebene und jenes der Bohreinheit aufweisen.

## Revendications

1. Procédé de présentation d'informations de positionnement dans une installation de forage de roche, laquelle installation de forage de roche (1) comprend : un transporteur mobile (4) ; au moins une flèche de forage (5) mobile par rapport au transporteur (4) ; une unité de forage (6) agencée sur la flèche de forage (5) et comprenant au moins une poutre d'alimentation (9) ; un dispositif d'alimentation (8), une machine de forage de roche (7) et un outil (10) ; et en outre au moins une unité de commande (16) ainsi qu'au moins un dispositif d'affichage (25) et au moins un organe de commande (15) qui y sont reliés ;
le procédé comprenant :
la détermination de l'emplacement et de la direction de l'unité de forage (6) dans l'unité de commande (16) ;
la présentation d'informations sur des trous (24) à forer dans un dispositif d'affichage (25) ;
le positionnement de l'unité de forage (6) dans un emplacement et une direction dans lesquels le trou sélectionné (24) peut être foré ;
la réalisation du positionnement manuellement en donnant des instructions de commande à l'unité de commande (16) à l'aide d'au moins un organe de commande (15) ; et
la présentation de l'emplacement et de la direction de l'unité de forage (6) à un opérateur (14) sur une image d'affichage (30) du dispositif d'affichage (25) par rapport à un plan en éventail dans lequel le point de départ du trou de forage sélectionné se trouve ;
**caractérisé par**
la présentation d'une image d'affichage (30) comprenant au moins une première vue partielle (31a) et une seconde vue partielle (31b) qui sont simultanément actives ; et
la présentation sur les vues partielles (31a, 31b) de l'emplacement du plan en éventail et de l'unité de forage l'un par rapport à l'autre en utilisant des projections différentes.

2. Procédé selon la revendication 1, **caractérisé par**
la présentation sur le dispositif d'affichage (25) d'un motif de forage (27) comprenant au moins un éventail de forage (28) définissant plusieurs trous de forage et leurs emplacements et directions dans un système de coordonnées en trois dimensions ;
la présentation sur la première vue partielle (31a) d'une projection de l'éventail de forage (28), vue depuis la direction d'une ligne de tunnel (L) ;
la présentation sur la seconde vue partielle (31b) d'une projection de l'éventail de forage correspondant (28) par rapport à la ligne de tunnel (L), vue depuis la direction transversale ; et
la présentation de la première vue partielle (31a) et de la seconde vue partielle (31b) l'une sur l'autre sur l'image d'affichage (30).

3. Procédé selon la revendication 1 ou 2, **caractérisé par**
la présentation sur la seconde vue partielle (31b) du plan en éventail sous observation en tant que ligne (35a) transversale à la ligne de tunnel (L), sur laquelle ligne les points de départ des trous de forage (24) se situent.

4. Procédé selon l'une quelconque des revendications précédentes, **caractérisé par**
la présentation de tous les degrés de liberté du positionnement de l'unité de forage (6) simultanément à l'aide des vues partielles (31a, 31b) de l'image d'affichage (30).

5. Procédé selon l'une quelconque des revendications précédentes, **caractérisé par**
le fait de donner une nouvelle position cible à l'unité de forage (6) à l'aide de l'organe de commande (15) et en utilisant les directions indiquées sur l'image d'affichage (30) ; et
la réalisation, commandée par l'unité de commande (16), d'un déplacement pour l'unité de forage (6) dans une direction sélectionnée et le maintien des autres directions inchangées.

6. Interface utilisateur d'une unité de commande d'une installation de forage de roche, comprenant :
au moins une image d'affichage (25) agencée pour présenter une image d'affichage (30) ayant l'emplacement et la direction d'un symbole indiquant l'emplacement de l'unité de forage par rapport à un plan en éventail sur lequel les points de départ des trous à forer se situent ; et
au moins un organe de commande (15) pour donner des instructions de commande à l'unité de commande (16) afin de positionner une unité de forage (6) comprise par l'installation de forage de roche aux points de départ des trous de forage (24) ;
**caractérisée en ce que**
l'image d'affichage (30) du dispositif d'affichage (25) comprend au moins une première vue partielle (31a) et une seconde vue partielle (31b) qui sont simultanément actives, les vues partielles ayant des projections différentes de l'emplacement réciproque du plan en éventail et de l'unité de forage ; et **en ce que**
les directions présentées par l'image d'affichage (30) et les directions physiques de mouvement de l'organe de commande (15) ont une connexion intuitive.

7. Interface utilisateur selon la revendication 6, **caractérisée en ce que**
le mouvement de l'organe de commande (15) dans une direction sélectionnée est agencé pour affecter l'emplacement de l'unité de forage sur l'image d'affichage (30) uniquement dans la direction sélectionnée.

8. Interface utilisateur selon la revendication 6 ou 7, **caractérisée en ce que**
l'image d'affichage (30) est agencée pour présenter un symbole (32) de l'unité de forage et en outre, par rapport à ce symbole (32), un symbole de trou (33) indiquant un trou de forage à former ainsi qu'un symbole de poutre d'alimentation (34) indiquant une poutre d'alimentation.

9. Interface utilisateur selon l'une quelconque des revendications 6 à 8, **caractérisée en ce que**
l'image d'affichage (30) est agencée pour présenter un point d'identification de roche (42) au point de départ de chaque trou foré, moyennant quoi le profil réalisé de la caverne rocheuse peut être vu au point du plan en éventail sous observation sur l'image d'affichage (30).

10. Interface utilisateur selon la revendication 9, **caractérisée en ce que**
l'image d'affichage (30) est agencée pour présenter un graphique s'étalant à traverser deux, ou plus, points d'identification de roche et indiquant le profil réalisé de la caverne rocheuse au point du plan en éventail sous observation.

11. Installation de forage de roche, comprenant :
un transporteur mobile (4) ;
au moins une flèche de forage (5) ;
une unité de forage (6) positionnée sur la flèche de forage (5) et comprenant au moins une poutre d'alimentation (9), une machine de forage de roche (7) supportée sur la poutre d'alimentation ; un dispositif d'alimentation (8) pour déplacer la machine de forage de roche sur la poutre d'alimentation ; et un outil (10) attaché à la machine de forage de roche ;
un moyen de mesure (18) pour mesurer l'emplacement et la direction de l'unité de forage (6) ;
au moins une unité de commande (16) agencée pour déterminer l'emplacement et la direction de l'unité de forage sur la base des informations de mesure ;
au moins un dispositif d'affichage (25) sur l'image d'affichage (30) dont l'unité de commande (16) est agencée pour présenter l'unité de forage (6) par rapport à un plan en éventail s'étalant à travers les points de départ de trous (24) à forer ; et
au moins un organe de commande (15) pour donner des instructions de commande manuelle afin de positionner l'unité de forage ;
**caractérisée en ce que**
l'image d'affichage (30) du dispositif d'affichage (25) comprend au moins une première vue partielle (31a) et une seconde vue partielle (31b) qui sont simultanément actives, les vues partielles ayant des projections différentes de l'emplacement réciproque du plan en éventail et de l'unité de forage.
